# EUROPÄISCHE PATENTSCHRIFT

(11) **EP 2 130 328 B1**
(45) Veröffentlichungstag und Bekanntmachung des Hinweises auf die Patenterteilung: **07.09.2011**
(21) Anmeldenummer: 08716289.7
(22) Anmeldetag: 06.03.2008
(51) Int. Cl.: H04L 12/40

(54) **VERFAHREN ZUM TRANSFER VON DATEN IN MEHRERE STEUERGERÄTE**
METHOD FOR TRANSFERRING DATA TO A PLURALITY OF CONTROL APPLIANCES
PROCÉDÉ POUR TRANSFÉRER DES DONNÉES VERS PLUSIEURS APPAREILS DE COMMANDE

(30) Priorität: 29.03.2007 DE 102007015122
(43) Veröffentlichungstag der Anmeldung: 09.12.2009
(73) Patentinhaber: Bayerische Motoren Werke Aktiengesellschaft, 80809 München (DE)
(72) Erfinder: MAJDOUB, Mohamed, 80807 München (DE); BAUMGARTNER, Martin, 85604 Zorneding (DE); KÖNIGSEDER, Thomas, 85457 Wilfling (DE)
(74) Vertreter: Grüter, Klaus Peter
(86) Internationale Anmeldenummer: PCT/EP2008/001772
(87) Internationale Veröffentlichungsnummer: WO 2008/119432

(56) Entgegenhaltungen:
- EP-A- 1 265 401
- US-A1- 2006 179 192

## Beschreibung

Die Erfindung betrifft insbesondere ein Verfahren zum Transfer einer ersten Ablaufsteuerung und/oder von ersten Daten in ein erstes Steuergerät und einer zweiten Ablaufsteuerung und/oder von zweiten Daten in ein zweites Steuergerät gemäß dem Oberbegriff des Anspruchs 1.

Bei einem aktuellen Verfahren wird eine in ein Steuergerät zu transferierende Ablaufsteuerung in mehrere Datenpakete aufgeteilt. Die Größe der Datenpakete richtet sich nach der Größe eines im Steuergerät vorgesehenen Pufferspeichers. Ein solches Datenpaket wird von einer fahrzeugexternen Übertragungs-Vorrichtung auf einen Datenbus im Fahrzeug gegeben, an den das betreffende Steuergerät angeschlossen ist. Das Datenpaket schreibt den Pufferspeicher voll und das Steuergerät gibt erst dann wieder den Bus frei. Durch den recht langsamen Schreibvorgang ist der Datentransfer über den Datenbus behindert.

Die EP 1 265 401 A beschreibt ein Verfahren zum Transfer einer Ablaufsteuerung und/oder von Daten nach dem Oberbegriff des Anspruchs 1.

Aufgabe der Erfindung ist insbesondere die Bereitstellung eines Verfahrens mit dem große Datenmengen schnell in die Steuergeräte eines Fahrzeugs transferiert werden können.

Diese Aufgabe wird durch die Merkmale des Anspruchs 1 gelöst. Vorteilhafte Ausgestaltungen der Erfindung sind Gegenstand der abhängigen Ansprüche.

Der Kern der Erfindung besteht darin, dass in einem ersten Schritt mit einem ersten Daten-Frame ein Teil der ersten Ablaufsteuerung und/oder der ersten Daten zu dem ersten Steuergerät übertragen wird. Unmittelbar daran anschließend wird in einem zweiten Schritt mit dem zweiten Daten-Frame ein Teil der zweiten Ablaufsteuerung und/oder der zweiten Daten zu dem zweiten Steuergerät übertragen. Das Daten-Frame weist das vorbestimmte Frame-Format bzw. Nachrichten-Format des zum Bus-Transfer benutzten Übertragungsprotokolls auf.

Ferner ist vorgesehen, dass die fahrzeugexteme Übertragungs-Vorrichtung eine Abfolge erster und zweiter Daten-Frames bereitstellt bis die erste Ablaufsteuerung und/oder die ersten Daten vollständig in das erste Steuergerät übertragen worden sind und nachfolgend lediglich zweite Daten-Frames der zweiten Ablaufsteuerung und/oder der zweiten Daten in das zweite Steuergerät überträgt.

In vorteilhafter Weise wird bei der Erfindung jeweils immer nur eine dem betreffenden Übertragungsprotokoll angepasste Datenmenge nacheinander an die anzusprechenden Steuergeräte übertragen. Diese protokollabhängige Datenmenge ist für den betreffenden Datenbus optimal, weil das Verhältnis von "overhead"-Daten zu "Nutzdaten" besonders günstig ist. Die Pufferspeicher der Steuergeräte können diese kleine Datenmenge schnell vom Datenbus abnehmen, so dass der Datenbus rasch wieder frei gegeben wird. Die anderen Steuergeräte werden unmittelbar anschließend ebenfalls mit nur kurzen Pausen mit Daten versorgt, was einen sehr stabilen Programmierprozess der Steuergeräte ermöglicht.

Bei einer Ausführungsform der Erfindung ist vorgesehen, dass im ersten Steuergerät ein temporär speichernder Pufferspeicher zur Speicherung einer Mehrzahl erster Daten-Frames vorgesehen ist, und aus der Mehrzahl erster Daten-Frames von dem ersten Steuergerät ein dauerhaft im ersten Steuergerät gespeichertes Daten-Paket gebildet wird.

In analoger Weise ist bei einer anderen Ausführungsform der Erfindung vorgesehen, dass im zweiten Steuergerät ein temporär speichernder Pufferspeicher zur Speicherung einer Mehrzahl zweiter Daten-Frames vorgesehen ist. Aus der Mehrzahl zweiter Daten-Frames wird von dem zweiten Steuergerät ein dauerhaft im zweiten Steuergerät gespeichertes Daten-Paket gebildet.

Bei einer Ausgestaltung der Erfindung ist vorgesehen, dass das erste Steuergerät und/oder das zweite Steuergerät unmittelbar nach dem Empfang eines betreffenden Daten-Frames prüft, ob dieses korrekt empfangen worden ist. Anderenfalls fordert es den betreffenden Daten-Frame erneut von der Übertragungs-Vorrichtung an und diese überträgt den betreffenden Daten-Frame erneut an das betreffende Steuergerät.

Bei einer bevorzugten Weiterbildung der Erfindung ist vorgesehen, dass der betreffende Daten-Frame ggü. anderen Daten-Frames für das betreffende Steuergerät zeitlich bevorzugt übertragen wird. Durch dieses "error handling" wird der Programmierprozess stabilisiert und beschleunigt.

Die Erfindung schlägt ferner ein Bus-System eines Kraftfahrzeugs mit mindestens einem ersten Datenbus und mehreren Steuergeräten vor, wobei das Bus-System ein erfindungsgemäßes Verfahren ausführt. Bei einem solchen Bus-System handelt es sich bevorzugt um ein System mit mindestens einem CAN-Bus und/oder einem MOST-Bus, die entsprechende standardisierte Protokolle zur Datenübertragung verwenden. Bei diesen bekannten automotiven Bus-Systemen ist CAN die Abkürzung für "Controller Area Network" und MOST die Abkürzung für "Media Oriented Systems Transport".

## Patentansprüche

1. Verfahren zum Transfer einer ersten Ablaufsteuerung und/oder von ersten Daten in ein erstes Steuergerät und einer zweiten Ablaufsteuerung und/oder von zweiten Daten in ein zweites Steuergerät, die jeweils über einen ersten Datenbus mit einer Übertragungs-Vorrichtung in Verbindung stehen, wobei der Transfer über den ersten Datenbus unter Verwendung eines ersten Übertragungsprotokolls vorgenommen wird, das erste Übertragungsprotokoll ein Daten-Frame mit einem vorbestimmten Frame-Format bzw. Nachrichten-Format aufweist, und der Transfer insgesamt durch die Übertragung einer Vielzahl von Daten-Frames erfolgt, wobei in einem ersten Schritt mit einem ersten Daten-Frame ein Teil der ersten Ablaufsteuerung und/oder der ersten Daten zu dem ersten Steuergerät übertragen wird, und unmittelbar daran anschließend in einem zweiten Schritt mit dem zweiten Daten-Frame ein Teil der zweiten Ablaufsteuerung und/oder der zweiten Daten zu dem zweiten Steuergerät übertragen wird,
**dadurch gekennzeichnet, dass**
- die Steuergeräte und der erste Datenbus in einem Kraftfahrzeug enthalten sind und
- die Übertragungs-Vorrichtung eine fahrzeugexterne Übertragungs-Vorrichtung ist, die eine Abfolge erster und zweiter Daten-Frames bereitstellt bis die erste Ablaufsteuerung und/oder die ersten Daten vollständig in das erste Steuergerät übertragen worden sind und nachfolgend lediglich zweite Daten-Frames der zweiten Ablaufsteuerung und/oder der zweiten Daten in das zweite Steuergerät überträgt.

2. Verfahren nach Anspruch 1, **dadurch gekennzeichnet, dass** im ersten Steuergerät ein temporär speichernder Pufferspeicher zur Speicherung einer Mehrzahl erster Daten-Frames vorgesehen ist, und aus der Mehrzahl erster Daten-Frames von dem ersten Steuergerät ein dauerhaft im ersten Steuergerät gespeichertes Daten-Paket gebildet wird.

3. Verfahren nach einem der vorstehenden Ansprüche, **dadurch gekennzeichnet, dass** im zweiten Steuergerät ein temporär speichernder Pufferspeicher zur Speicherung einer Mehrzahl zweiter Daten-Frames vorgesehen ist, und aus der Mehrzahl zweiter Daten-Frames von dem zweiten Steuergerät ein dauerhaft im zweiten Steuergerät gespeichertes Daten-Paket gebildet wird.

4. Verfahren nach einem der vorstehenden Ansprüche, **dadurch gekennzeichnet, dass** das erste und/oder das zweite Steuergerät unmittelbar nach dem Empfang eines betreffenden Daten-Frames prüft, ob dieses korrekt empfangen worden ist, anderenfalls den betreffenden Daten-Frame erneut von der Übertragungs-Vorrichtung anfordert und diese den betreffenden Daten-Frame erneut an das betreffende Steuergerät überträgt.

5. Verfahren nach Anspruch 4, **dadurch gekennzeichnet, dass** der betreffende Daten-Frame ggü. anderen Daten-Frames für das betreffende Steuergerät zeitlich bevorzugt übertragen wird.

6. Bus-System eines Kraftfahrzeugs mit mindestens einem ersten Datenbus und mehreren Steuergeräten, **dadurch gekennzeichnet, dass** die Steuergeräte jeweils über den ersten Datenbus mit einer fahrzeugexternen Übertragungs-Vorrichtung in Verbindung stehen, und daß im Bus-System ein Verfahren nach einem der vorstehenden Ansprüche ausgeführt wird.

7. Bus-System nach Anspruch 6, **dadurch gekennzeichnet, dass** der erste Datenbus ein CAN-Bus oder ein MOST-Bus ist.

## Claims

1. A method for transferring a first sequence control and/or first data into a first control apparatus and a second sequence control and/or second data into a second control apparatus, which are in each case connected via a first data bus to a transmission device, wherein the transfer takes place via the first data bus using a first transmission protocol, the first transmission protocol has a data frame with a predetermined frame format or message format and the transfer as a whole takes place by means of the transmission of a large number of data frames, wherein in a first step, with a first data frame, a part of the first sequence control and/or the first data is transmitted to the first control apparatus, and directly following this, in a second step, with the second data frame, a part of the second control sequence and/or the second data is transmitted to the second control apparatus, **characterised in that**
- the control apparatuses and the first data bus are contained in a motor vehicle and
- the transmission device is a transmission device external to the vehicle, which provides a sequence of first and second data frames until the first sequence control and/or the first data have been completely transmitted into the first control apparatus and subsequently only transmits second data frames of the second sequence control and/or the second data into the second control apparatus.

2. A method according to claim 1, **characterised in that** a temporarily storing buffer memory for storing a plurality of first data frames is provided in the first control apparatus, and a data package permanently stored in the first control apparatus is formed by the first control apparatus from the plurality of first data frames.

3. A method according to either of the preceding claims, **characterised in that** a temporarily storing buffer memory for storing a plurality of second data frames is provided in the second control apparatus, and a data package permanently stored in the second control apparatus is formed by the second control apparatus from the plurality of second data frames.

4. A method according to any one of the preceding claims, **characterised in that** the first and/or the second control apparatus checks directly after receiving a relevant data frame whether this has been correctly received, otherwise again requests the relevant data frame from the transmission device and the latter again transmits the relevant data frame to the relevant control apparatus.

5. A method according to claim 4, **characterised in that** the relevant data frame is transmitted preferentially with respect to time in relation to other data frames for the relevant control apparatus.

6. A bus system of a motor vehicle with at least one first data bus and a plurality of control apparatuses, **characterised in that** the control apparatuses are in each case connected via the first data bus to a transmission device external to the motor vehicle, and **in that** a method according to any one of the preceding claims is carried out in the bus system.

7. A bus system according to claim 6, **characterised in that** the first data bus is a CAN bus or a MOST bus.

## Revendications

1. Procédé de transfert d'une première commande de déroulement et/ou de premières données dans un premier appareil de commande et une seconde commande de déroulement et/ou de secondes données dans un second appareil de commande reliés respectivement par un premier bus de données à un dispositif de transmission,
- le transfert par le premier bus de données se faisant en utilisant un premier protocole de transmission,
- le premier protocole de transmission ayant une trame de données avec un format de trame prédéfini ou un format d'informations et le transfert se fait globalement par la transmission d'un grand nombre de trames de données,
selon lequel
- dans une première étape, avec une première trame de données, on transmet une partie de la première commande de déroulement et/ou des premières données vers le premier appareil de commande et directement ensuite, dans une seconde étape, avec la seconde trame de données, on transmet une partie de la seconde commande de déroulement et/ou des secondes données, vers le second appareil de commande,
procédé **caractérisé en ce que**
- les appareils de commande et le premier bus de données, équipent un véhicule automobile,
- le dispositif de transmission est un dispositif de transmission externe au véhicule qui fournit une succession de premières et de secondes trames de données jusqu'à ce que la première commande de déroulement et/ou les premières données, soient complètement transmises au premier appareil de commande et ensuite, on transmet uniquement les secondes trames de données de la seconde commande de déroulement et/ou les secondes données dans le second appareil de commande.

2. Procédé selon la revendication 1,
**caractérisé par**
une mémoire tampon de stockage temporaire est prévue dans le premier appareil de commande pour enregistrer un ensemble de premières trames de données et à partir de l'ensemble des premières trames de données, le premier appareil de commande forme un paquet de données enregistrées de manière permanente dans le premier appareil de commande.

3. Procédé selon l'une des revendications précédentes,
**caractérisé en ce que**
le second appareil de commande comporte une mémoire tampon de stockage temporaire pour enregistrer un ensemble de secondes trames de données et à partir de l'ensemble des secondes trames de données, le second appareil de commande forme un paquet de données enregistrées de manière permanente dans le second appareil de commande.

4. Procédé selon l'une des revendications précédentes,
**caractérisé en ce que**
après la réception d'une trame de données, le premier et/ou le second appareil de commande vérifie directement si la réception s'est effectuée correctement et au cas contraire, il demande la retransmission de la trame de données concernée à partir du dispositif de transmission qui retransmet la trame de données vers l'appareil de commande concerné.

5. Procédé selon la revendication 4,
**caractérisé en ce que**
la trame de données concernée est transmise de manière prioritaire dans le temps, par rapport à d'autres trames de données pour l'appareil de commande concerné.

6. Système de bus d'un véhicule automobile ayant au moins un premier bus de données et plusieurs appareils de commande,
**caractérisé en ce que**
- les appareils de commande sont reliés par le premier bus de données à un dispositif de transmission externe au véhicule, et
- le bus de données exécute un procédé selon l'une des revendications précédentes.

7. Système de bus selon la revendication 6,
**caractérisé en ce que**
le premier bus de données est un bus CAN ou un bus MOST.
